# EUROPEAN PATENT APPLICATION

(11) **EP 1 669 298 A1**
(43) Date of publication of application: **14.06.2006**
(21) Application number: 04787769.1
(22) Date of filing: 09.09.2004
(51) Int. Cl.: B65D 6/00, B65D 5/04

(54) **ELECTRIC POWER STEERING SYSTEM**

(30) Priority: 09.09.2003 JP 2003317147
(71) Applicant: JTEKT Corporation, Osaka-shi Osaka 542-8502 (JP)
(72) Inventor: OYA, Toshiaki, Sakai-shi, Osaka 592-8342 (JP); NISHIZAKI, Katsutoshi, Nabari-shi, Mie, 518-0735 (JP); SAKAMAKI, Masahiko, Okazaki-shi, Aichi, 444-2145 (JP)
(74) Representative: Sajda, Wolf E.
(86) International application number: PCT/JP2004/013105
(87) International publication number: WO 2005/026003

(57) **Abstract**

An electric power steering system includes: an electric motor (6) for generating a steering assist force; a torque sensor (3) for detecting a steering torque; means (10) for generating a control target value for the electric motor (6) according to the detected steering torque; and means (28) for providing a non-interactive control of the electric motor. The system further includes a filter (12) which acts in the process of generating the control target value for the electric motor based on the steering toque. The filter (12) includes: a phase compensator (13) for decreasing a resonant peak gain of the system; and an LPF (12) for decreasing a second peak at a higher frequency than that of the resonant peak. The system is not degraded in the characteristics thereof even though the system provides a non-interactive control for ensuring followability of motor control.

## Description

### Technical Field

The present invention relates to an electric power steering system.

### Background Art

The electric power steering system is designed to apply a steering assist force to a steering mechanism by driving an electric motor according to a steering torque applied to a handle (steering wheel) by a driver.
In the control of the electric motor, it is desired to improve the followability of motor control. If the motor control is poor in the followability, for example, the driver may have an inertia feeling or a dull response feeling when the motor is operating at low load including a dead zone. Thus, steering feeling is degraded.

For improving the followability of the motor control, it may be contemplated to provide a non-interactive control of the motor. It is noted here that a term "interaction" means an event that when the operation quantity of one of the plural control systems is changed, the control quantity of the other control system(s) is affected. The term "non-interactive control", as used herein, means a control mode which prevents interaction between interactive control systems, thereby handling the control systems as independent, non-interactive systems.
In the case of a control wherein measurement values of a d-axis current and a q-axis current of a brushless motor are fed back to respective target values of the d-axis current and q-axis current, for example, dielectric power of the motor causes interaction between a d-axis control system and a q-axis control system. Specifically, when the target value of the d-axis current is changed, the measurement value of the q-axis current is also affected. When the target value of the d-axis current is changed, the measurement value of the q-axis current is also affected. Thus, the motor is decreased in the followability.

In the non-interactive control, a non-interactive control portion having such a transmission function as to eliminate the interaction between the above d- and q-axes is provided such that the d-axis control system and the q-axis control system may be handled as independent control systems.
Such a non-interactive control is disclosed in Japanese Unexamined Patent Publication No.2001-18822. The motor may be improved in the followability by establishing non-interaction between the control systems.
However, actual measurements taken by the inventors have revealed that the system reliability is not ensured if the followability of the motor is improved by providing the non-interactive control.
Furthermore, the improvement of the motor followability based on the non-interactive control entails a drawback of increasing high-frequency components of road noise (unwanted vibrations for driver). If a simple measure such as an LPF (low-pass filter) is used for overcoming this drawback, an adequate response performance may not be achieved.

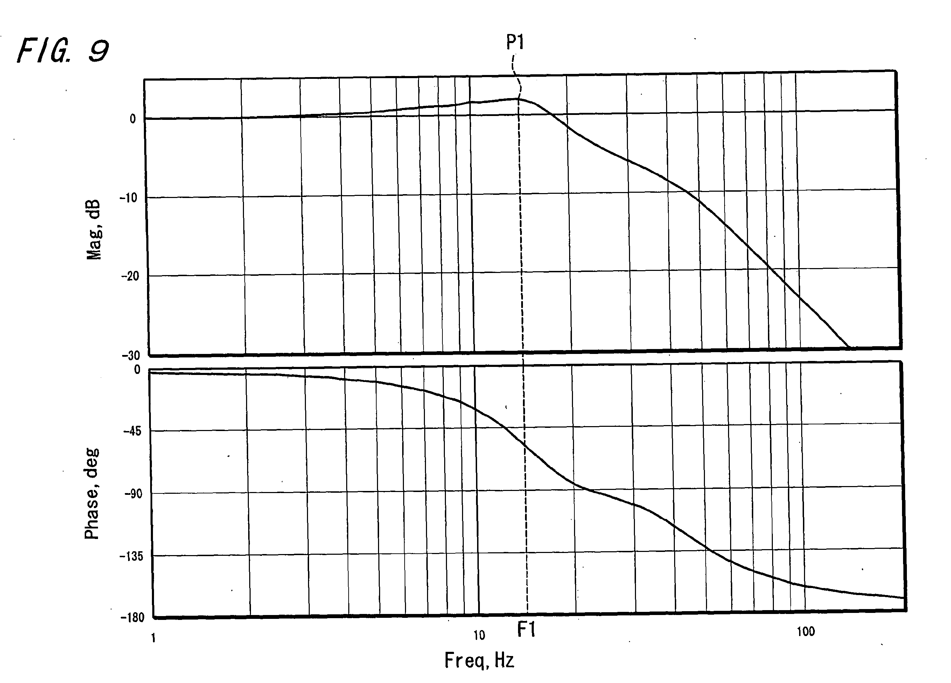

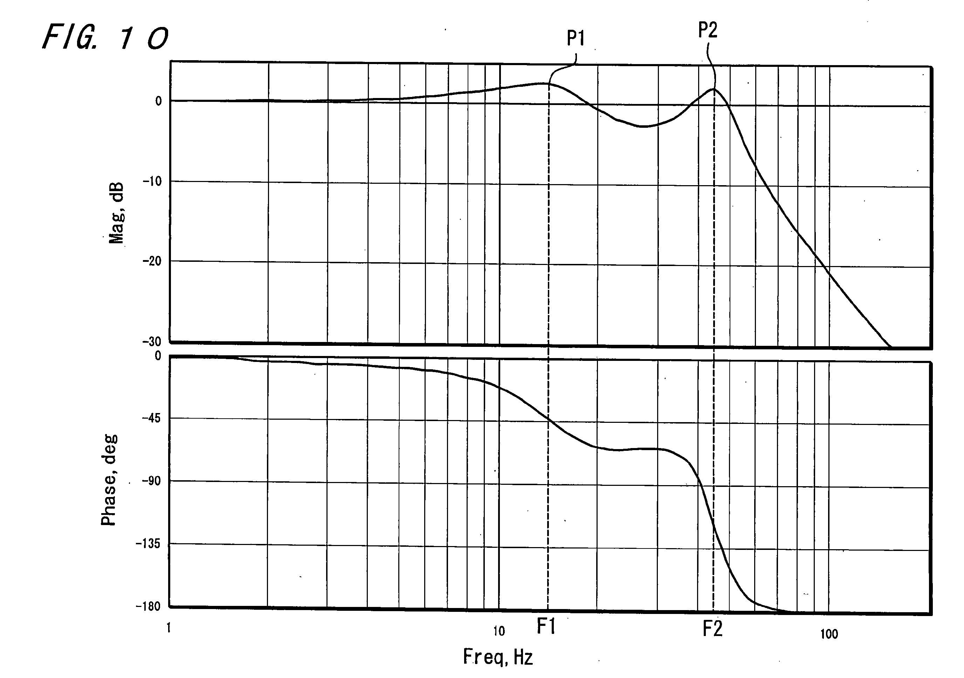

FIG. 9 shows characteristics (gain characteristic, phase characteristic) of an electric power steering system which does not provide the non-interactive control of the electric motor. FIG. 10 shows characteristics (gain characteristic, phase characteristic) of an electric power steering system which provides the non-interactive control of the electric motor.
As shown in FIG. 9, the gain characteristic of the system not providing the non-interactive control has a peak P1 in proximity of a frequency F1 (10 Hz to 20 Hz).

In contrast, if the non-interactive control is provided, the followability of motor control is improved as indicated by the phase characteristic shown in FIG. 10. However, the inventors have discovered from the actual measurements that the non-interactive control involves the occurrence of another high gain portion P2 in proximity of a higher frequency F2 (20 Hz to 50 Hz) than the frequency F1. This peak P2 appears at the higher frequency than that of P1. It is inferred that the streamlining of an electric control system by adopting the non-interactive control allows the influence of a mechanical system to be developed so as to bring about this peak. Because of the existence of the peak P2, the high-frequency components of the road noise are increased so that the steering feeling is degraded.
For achieving a good steering feeling, it is necessary to shape the high-gain portions P1, P2 of the characteristic curve, shown in FIG. 10, of the system providing the non-interactive control.

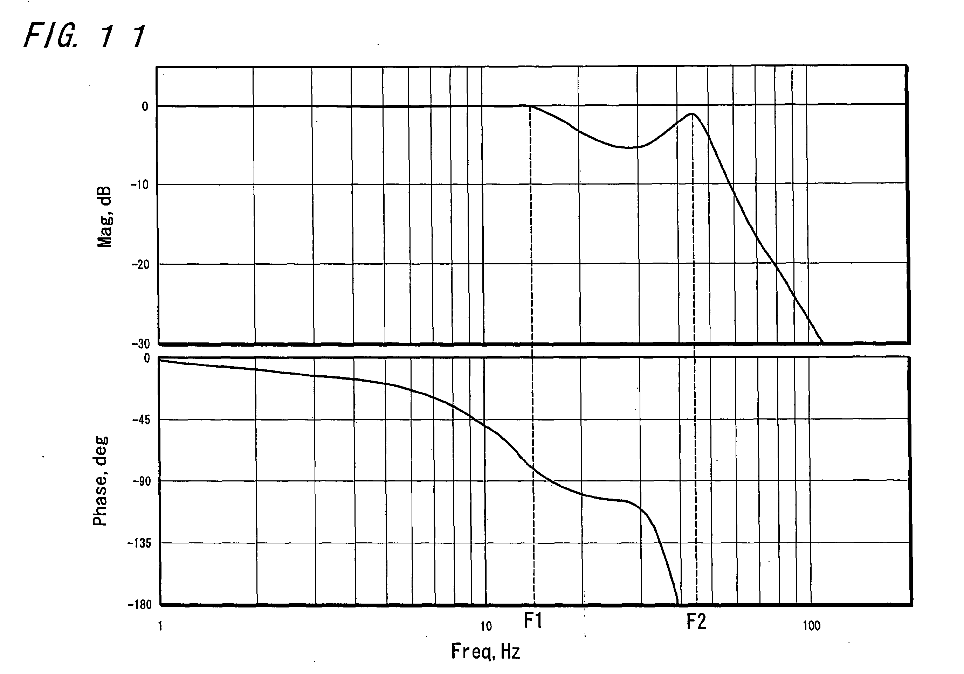

It may be simply contemplated to use the LPF for shaping the high-gain portions P1, P2. In order to shape the high-gain portions P1, P2, the LPF must have its cut-off frequency set to about 10 Hz or less.
If such an LPF is used, both of the peaks P1, P2 may be decreased, as shown in FIG. 11. However, the LPF suffers a significant phase delay and hence, the phase characteristic improved by providing the non-interactive control is impaired.

### Disclosure of the Invention

A problem to be solved by the invention consists in that the non-interactive control for achieving the good followability fails to provide good characteristics. Hence, the invention is directed to a solution to this problem.

According to the invention, an electric power steering system comprises: an electric motor for generating a steering assist force; a torque sensor for detecting a steering torque; means for generating a control target value for the electric motor according to the detected steering toque; means for providing a non-interactive control of the electric motor; and a filter acting in the process of generating the control target value for the electric motor based on the detected steering torque, the filter including a first filter for decreasing a resonant peak gain of the system, and a second filter for decreasing a second peak at a higher frequency than that of the resonant peak.

According to the invention, the resonant peak of the system is decreased by the first filter. Furthermore, the second peak appearing due to the non-interactive control for improving the followability is decreased by the second filter. Therefore, the unwanted high-frequency components resulting from the non-interactive control are eliminated so that the system is improved in the characteristics and operates reliably.

The first filter may preferably serve to advance phases of higher frequencies than that of the resonant peak. In this case, the phases of the higher frequencies than that of the resonant peak are advanced so that the followability is improved. If the first filter employs a BEF (band elimination filter) having its center frequency set in proximity of the frequency of the resonant peak, for example, higher frequencies than the center frequency of the BEF are advanced in phase so that the system is further improved in the characteristics.
It is further preferred that the first filter is a BEF having its center frequency set in proximity of the frequency of the resonant peak.

The second filter may preferably be an LPF (low-pass filter) or a BEF (band elimination filter). Both of the LPF and the BEF may eliminate the second peak. Incidentally, the LPF is more preferred because the LPF can reduce an operation load.

### Brief Description of the Drawings

- FIG. 1: is a schematic diagram showing an arrangement of an electric power steering system;
- FIG. 2: is a group of block diagrams each showing a target current decision portion of an ECU;
- FIG. 3: is a block diagram showing a drive control unit of the ECU;
- FIG. 4: is a Bode diagram showing filter characteristics;
- FIG. 5: is a Bode diagram of a phase compensator;
- FIG. 6: is a Bode diagram showing characteristics of a system which provides a non-interactive control and which employs the phase compensator;
- FIG. 7: is a Bode diagram showing characteristics of a system which provides the non-interactive control and which employs an LPF;
- FIG. 8: is a Bode diagram showing characteristics of a system according to an embodiment of the invention;
- FIG. 9: is a Bode diagram showing characteristics of a system which does not provide the non-interactive control;
- FIG. 10: is a Bode diagram showing characteristics of a system (equipped with no filter) which provides the non-interactive control; and
- FIG. 11: is a Bode diagram showing characteristics of a system which uses the LPF for shaping high gains.

### Description of Reference Numerals

3: Torque sensor
6: Electric Motor
10: Target Current Decision Portion (Means for Generating Control Target Value)
12: Filter
13: First Filter (Phase Compensator, BEF)
14: Second Filter (LPF (or BEF))
28: Non-interactive Control Operation Portion (Means for Providing Non-Interactive Control)

### Best Modes for Carrying Out the Invention

Preferred embodiments of the invention will hereinbelow be described with reference to the accompanying drawings.

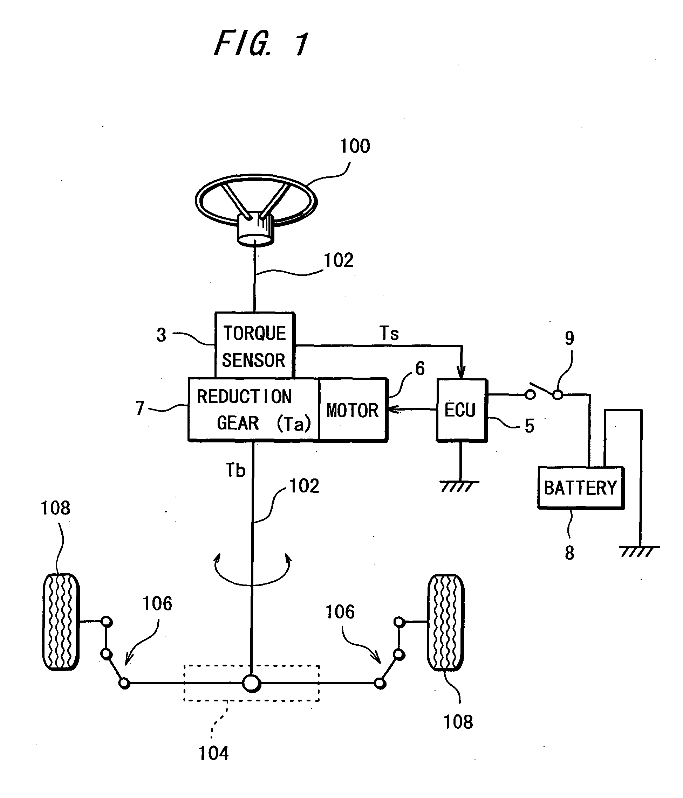

FIG. 1 shows an arrangement of an electric power steering system and of an associated vehicle. The electric power steering system includes: a steering shaft 102 having one end thereof secured to a handle (steering wheel) 100 as a steering member; and a rack and pinion mechanism 104 coupled to the other end of the steering shaft 102.

When the steering shaft 102 is rotated, the rotation thereof is converted into a reciprocal motion of the rack shaft by means of the rack and pinion mechanism 104. Opposite ends of the rack shaft are coupled with road wheels 108 via coupling members 106 each including a tie rod and a knuckle arm. The directions of the road wheels 108 are changed according to the reciprocal motion of the rack shaft.

The electric power steering system further includes: a torque sensor 3 for detecting a steering torque applied to the steering shaft 102 by operating the handle 100; an electric motor (brushless motor) 6 for generating a steering assist force; a reduction gear 7 for transmitting the steering assist force, generated by the motor 6, to the steering shaft 102; and an electronic control unit (ECU) 5 powered by an onboard battery 8 for controllably driving the motor 6 based on sensor signals from the torque sensor 3 and the like.

When a driver operates the handle 100 of the vehicle equipped with such an electric power steering system, a steering torque associated with the operation of the handle is detected by the torque sensor 3. Based on the detected value of the steering torque Ts, a vehicle speed and the like, the ECU 5 drives the motor 6 which, in turn, generates the steering assist force. The steering assist force is applied to the steering shaft 102 via the reduction gear 7 whereby load on a driver operating the steering wheel is reduced. Specifically, a sum of the steering torque Ts applied by operating the handle and the steering assist force Ta generated by the motor 6 is applied to the steering shaft 102 as an output torque Tb, whereby the vehicle is steered.

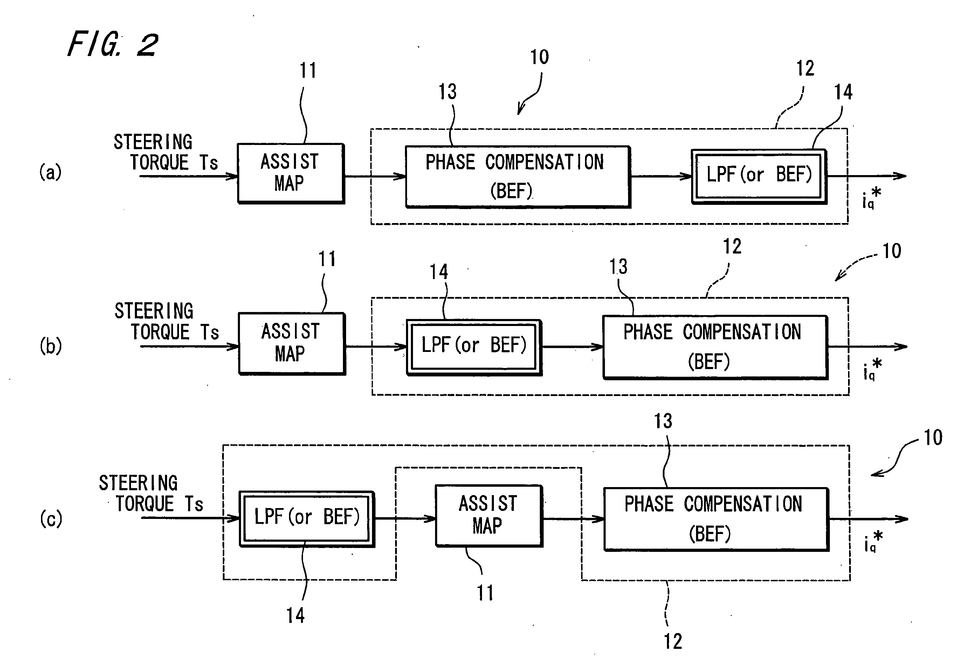

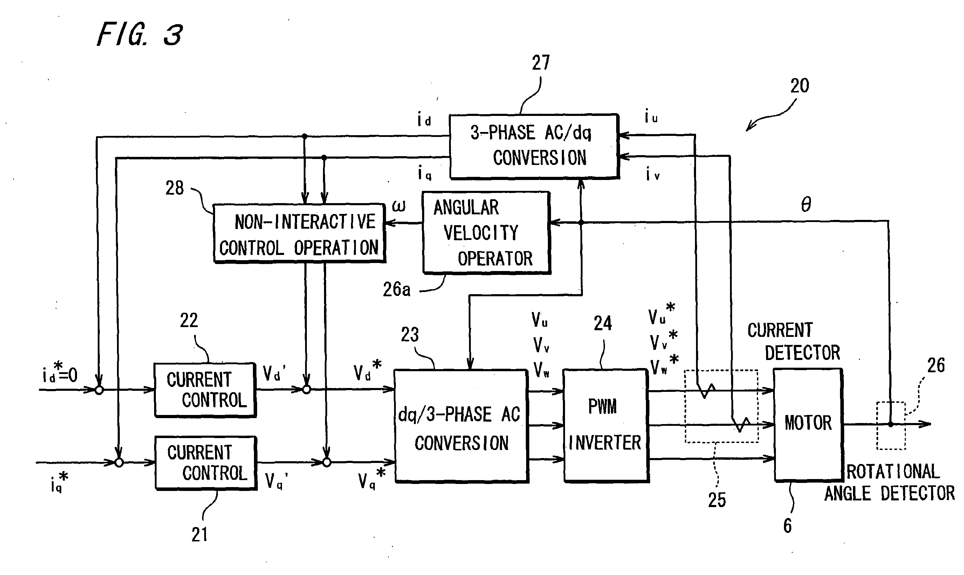

FIG. 2 and FIG. 3 are block diagrams showing arrangements of principal parts belonging to the ECU as the control unit of the electric power steering system. The ECU 5 decides a target current of the motor 6 based on the steering torque Ts supplied from the torque sensor 3 and accordingly controls the motor 6 for causing the motor to generate the steering assist torque Ta.

Specifically, the ECU includes: a target current decision portion 10 for deciding the target current (control target value) of the motor 6 based on the steering torque Ts, as shown in FIG. 2A to FIG. 2C; and a drive control unit 20 for controllably driving the motor 6 based on the target current, as shown in FIG. 3.
The target current decision portion 10 is designed to decide a q-axis target current iq* of the motor and includes an assist map 11 and a filter 12. The functions of the assist map 11 and the filter 12 are implemented in operations based on programs.

The assist map 11 correlates the detected steering torque Ts with the target current value based on which the steering assist force is generated. The filter 12 acts in the process of deciding the target current (control target value) from the steering torque Ts and includes a phase compensator 13 as a first filter and an LPF (low-pass filter) 14 as a second filter.

Referring to FIG. 2, the diagrams 2A to 2C each illustrate the order of operations of the assist map 11, the phase compensator 13 and the LPF 14. In the case of FIG. 2A, an operation using the assist map 11 is first performed, followed by phase compensation and then by the operation of the LPF 14.

In the case of FIG. 2B, after the operation using the assist map 11, the LPF 14 is operated and followed by the phase compensation.
In the case of FIG. 2C, after the operation of the LPF 14, the operation using the assist map 11 is performed and followed by the phase compensation.
The target current decision portion 10 may obtain the same result if the order of operations of the assist map 11, the phase compensator 13 and the LPF 14 is changed.

The drive control unit 20 includes: a q-axis current controller 21; a d-axis current controller 22; a dq/3-phase AC converter 23; a PWM inverter 24; a current detector 25; a rotational angle detector 26 for detecting a rotational angle of the motor 6; a 3-phase AC/dq converter 27; and a non-interactive control operation portion 28.

The current controllers 21, 22 provide controls, such as PI control, based on a deviation between a dq-axes target current (id*, iq*) and a detected dq-axes current (id, iq) so as to generate a dq-axes target voltage (Vd', Vq'). The dq-axes current (id, iq) is obtained by detecting a 3-phase current (iu, iv) applied to the motor 6 by means of the current detector and converting the detected current (iu, iv) by means of the 3-phase AC/dq converter 27.

The non-interactive control operation portion 28 performs a non-interactive control operation based on the detected dq-axes current (id, iq) and an angular velocity ω which is calculated by an angular velocity operator 26a based on a rotational angle θ of the motor detected by the rotational angle detector 26.
The detected d-axis current id is affected by a control system related to the q-axis, whereas the detected q-axis current iq is affected by the control system related to the d-axis. However, such interactions are eliminated by the non-interactive control operation.
Specifically, the dq-axes target voltage (Vd', Vq') generated by the current controllers 21, 22 is corrected by the non-interactive control operation portion 28 so as to be converted into a non-interactively controlled dq-axes target voltage (Vd*, Vq*) which is applied to the dq/3-phase AC converter 23.
The dq/3-phase AC converter 23, in turn, performs dq/3-phase AC conversion based on the non-interactively controlled dq-axes target voltage (Vd*, Vq*) so as to generate a 3-phase target voltage (Vu, Vv, Vw), which is supplied to the PWM inverter (motor driver) 24.

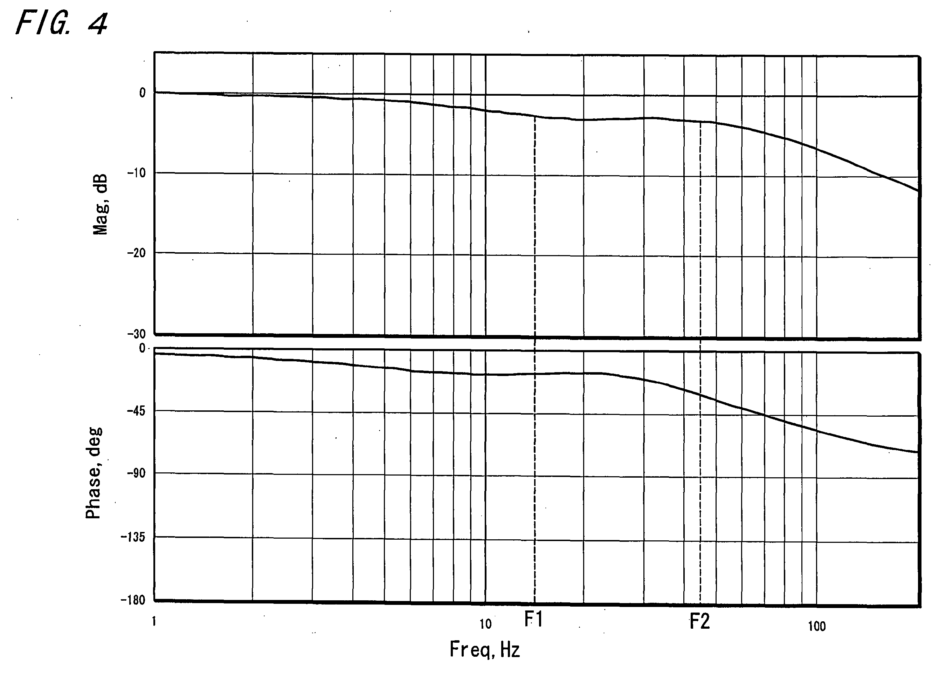

FIG. 4 shows frequency characteristics of the filter 12 of FIG. 2. The characteristics of the filter 12 are implemented by combining a characteristic of the phase compensator 13 and that of the LPF 14. Gains at frequencies F1, F2 are decreased by the filter 12.

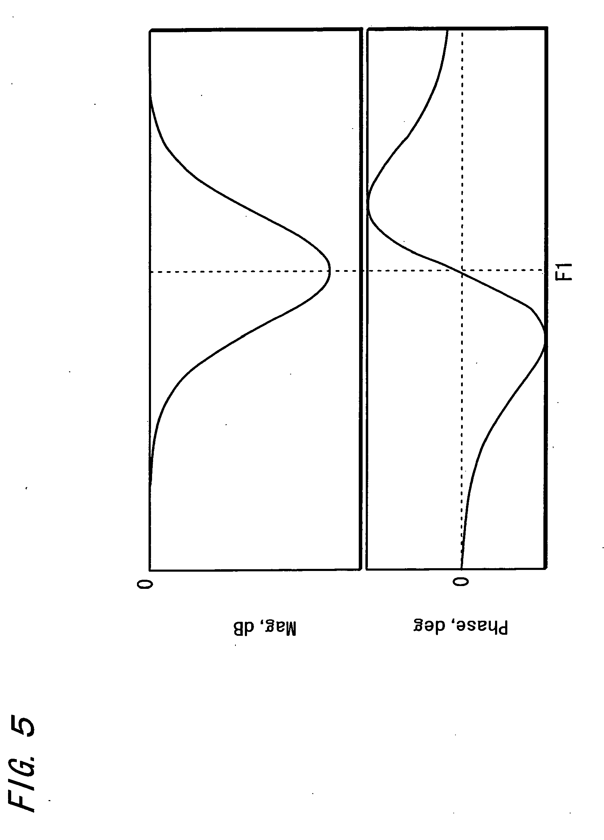

As shown in FIG. 5, the phase compensator 13, as one of the components of the filter 12, functions as a BEF (band elimination filter), a center frequency of which is set in proximity of the frequency F1 (say, 15Hz) of a first resonant peak P1. Thus, the phase compensator decreases the first resonant peak gain.
The phase compensator 13 also functions to delay phases of frequencies lower than the frequency F1 but to advance phases of frequencies higher than the frequency F1.

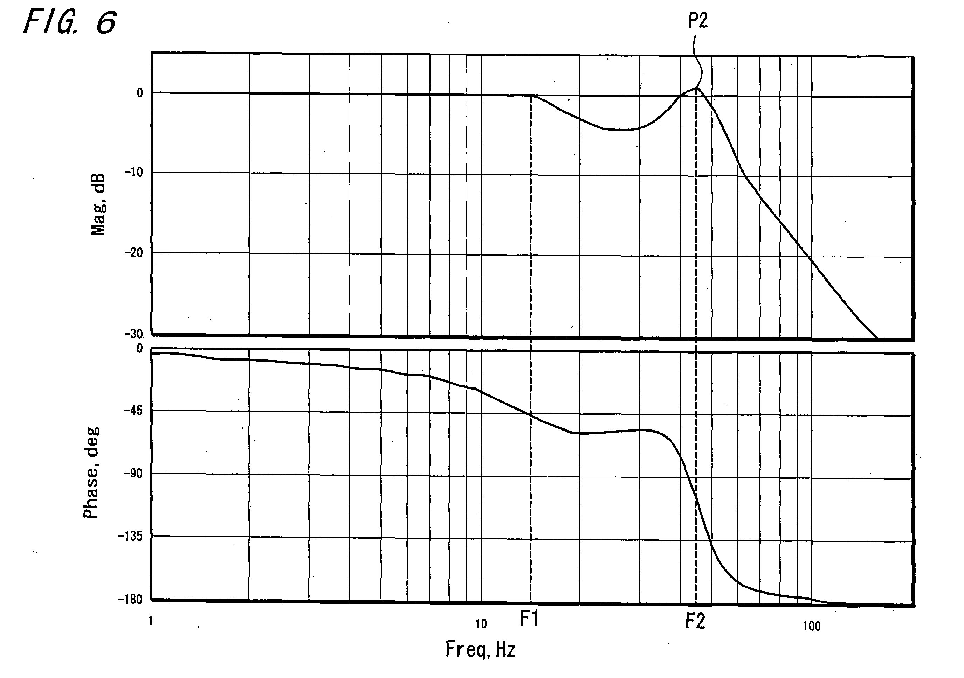

Therefore, in a case where a steering system (not equipped with the filter 12) exhibiting characteristics shown in FIG. 10 under the non-interactive control employs only the phase compensator 13 and obviates the LPF 14, a peak gain at the frequency F1 is decreased but a peak P2 at the frequency F2 remains unchanged, as shown in FIG. 6. It is noted that the phases of the frequencies higher than the frequency F1 are advanced.

The LPF 14, as one of the components of the filter 12, serves to decreases a gain at the second peak P2. The LPF has its cut-off frequency set between the first frequency F1 and the second frequency F2 (preferably in proximity of F2). Therefore, the LPF does not function to decrease the peak gain P1. The cut-off frequency of the LPF 14 may preferably be in the range of 20 to 30 Hz.

Since the cut-off frequency of the LPF 14 is set at a relatively high level, the LPF 14 causes little phase delay at frequencies below the frequency F2 (necessary frequencies for the driver; road information) although the phase delay occurs at high frequencies above the frequency F2 or around F2 (unwanted road noises for the driver).

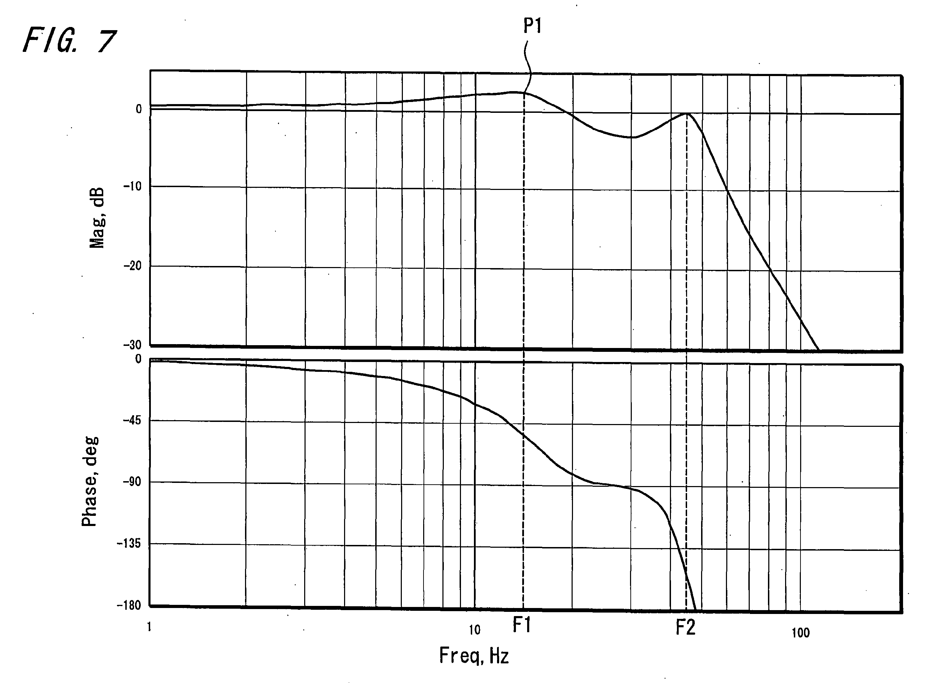

In a case where the steering system (not equipped with the filter 12) exhibiting the characteristics shown in FIG. 10 under the non-interactive control employs the LPF 14 but obviates the phase compensator 13, the peak gain at the frequency F2 is decreased but the peak at the frequency F1 remains unchanged, as shown in FIG. 7. Furthermore, a relatively significant phase delay occurs at the frequencies above the frequency F2 or around F2.

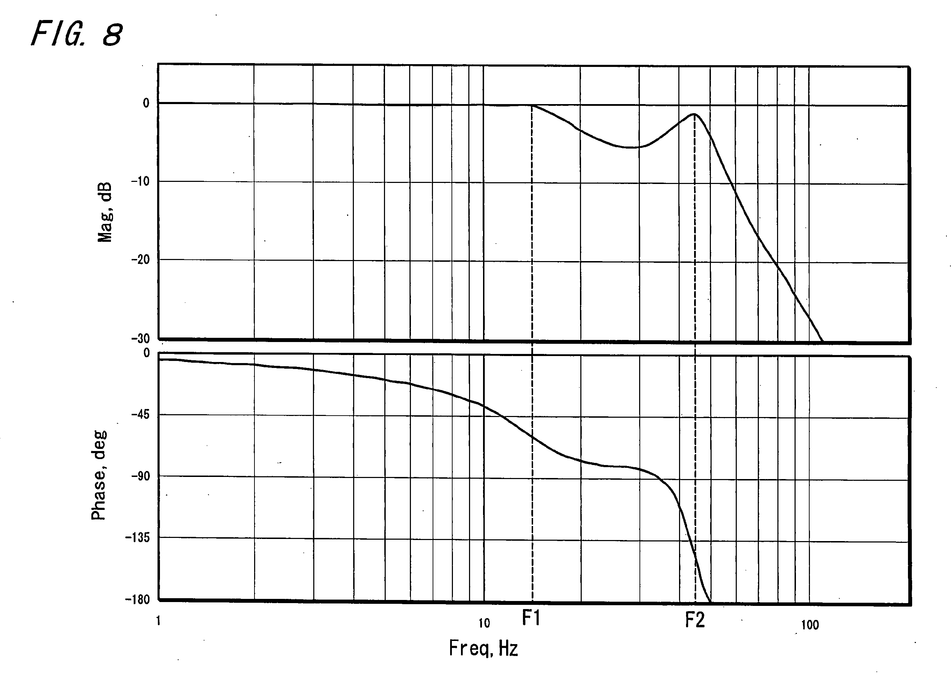

In a case where the steering system exhibiting the characteristics shown in FIG. 10 under the non-interactive control employs the whole body of the filter 12 (filter having the characteristics shown in FIG. 4) combining the phase compensator 13 and the LPF 14, the system exhibits characteristics as shown in FIG. 8. Specifically, both of the peaks P1, P2 are decreased to less than 0[dB] indicating that the increase of the high frequency components as the road noise is prevented.

Although the phase delay occurs at the frequencies above the frequency F2, which frequencies constitute the road noise, the phase delay is relatively small at the lower frequencies than F2. Therefore, the motor control achieves an adequate followability in the frequency range necessary for the driver (say, 30 Hz or less).

The characteristics shown in FIG. 8 are compared with characteristics of FIG. 11 wherein only the LPF is used for decreasing the peak gains P1, P2. In the characteristics of FIG. 11, the phase delay also occurs in the frequency range of 10 to 30 Hz, which is necessary for providing the road information and the like. In contrast, the characteristics of FIG. 8 obviate the phase delay in the frequency range in question.

Thus, the system of the embodiment which includes the filter 12 is adapted to suppress an unnecessary motion of the motor 6 operating at low load including the dead zone, so as to suppress unnatural response such as the inertia feeling or the dull response feelinG. Furthermore, the motor 6 is improved in the followability so that the motor may operate with decreased discontinuity in shift from the dead zone to the assist zone.

It is to be noted that the invention is not limited to the foregoing embodiments. For the reduction of the peak gain P2, for example, a BEF (band elimination filter) having its center frequency set in proximity of F2 may be used in place of the LPF 14.

## Claims

1. An electric power steering system comprising:
an electric motor for generating a steering assist force;
a torque sensor for detecting a steering torque;
means for generating a control target value for the electric motor according to the detected steering toque;
means for providing a non-interactive control of the electric motor; and
a filter acting in the process of generating the control target value for the electric motor based on the detected steering torque,
the filter including a first filter for decreasing a resonant peak gain of the system, and a second filter for decreasing a second peak at higher frequency than that of the resonant peak.

2. An electric power steering system according to Claim 1, wherein the first filter serves to advance phases of higher frequencies than the resonant peak.

3. An electric power steering system according to Claim 1, wherein the first filter is a band elimination filter having its center frequency set in proximity of the frequency of the resonant peak.

4. An electric power steering system according to Claim 1, wherein the second filter is a low-pass filter or a band elimination filter.
